# EUROPÄISCHE PATENTSCHRIFT

(11) **EP 1 046 843 B1**
(45) Veröffentlichungstag und Bekanntmachung des Hinweises auf die Patenterteilung: **17.09.2003**
(21) Anmeldenummer: 00107096.0
(22) Anmeldetag: 06.04.2000
(51) Int. Cl.: F16K 7/06

(54) **Quetschventil**
Pinch valve
Soupape à pincement

(30) Priorität: 19.04.1999 DE 19917622
(43) Veröffentlichungstag der Anmeldung: 25.10.2000
(73) Patentinhaber: Ferton Holding SA, 2800 Delémont (CH)
(72) Erfinder: Schulz, Manfred, 88662 Überlingen (DE)
(74) Vertreter: Gauger, Hans-Peter, Dipl.-Ing.

(56) Entgegenhaltungen:
- DE-A- 2 002 240
- US-A- 4 877 053

## Beschreibung

Die Erfindung bezieht sich auf ein Quetschventil mit einem Durchfluß-Regelorgan in der Ausbildung eines flexiblen Schlauchabschnittes gemäß der durch den Oberbegriff des Patentanspruches 1 angegebenen Art.

Bei einem aus der EP 0 097 288 B1 bekannten Quetschventil dieser Art bildet der flexible Schlauchabschnitt eine Teillänge einer Fluidleitung. Über die Fluidleitung wird ein Luft-Pulver-Gemisch an eine Düse eines Handstückes angeliefert, mit welchem bei einem der Zahnreinigung dienenden Prophylaxe-Gerät dieses Gemisch gemeinsam mit einem aus der Düse noch austretenden Wasserstrahl gegen eine zu reinigende Zahnfläche versprüht wird. Das Quetschventil ist mit einer zylindrischen Gehäusekammer ausgebildet, welche von dem Schlauchabschnitt durchquert wird. In der Gehäusekammer ist ein entgegen einer Rückstellfeder pneumatisch beweglicher Kolben angeordnet, mit welchem auf den Schlauchabschnitt eingewirkt wird, sobald ein vorbestimmter Betätigungsdruck über eine ventilgesteuerte Anschlußleitung in die Gehäusekammer zugeleitet wird. Unter diesem vorbestimmten Betätigungsdruck wird der Schlauchabschnitt durch den Kolben vollständig abgeklemmt, sodaß damit eine Durchflußsperre für das Luft-Pulver-Gemisch hin zu der Düse des Handstückes erhalten wird. Diese Durchflußsperre wird wieder beseitigt, sobald der Betätigungsdruck ventilgesteuert aufgehoben und dann der Kolben durch die Rückstellfeder in eine Ausgangslage zurückbewegt ist. Zur Vermeidung einer übermäßigen Materialbeanspruchung des Schlauchabschnittes kann bei diesem bekannten Quetschventil der Kolben auch für die Aufnahme eines separaten Druckgliedes ausgebildet sein, welches in einer mit dem vorbestimmten Betätigungsdruck erhaltenen Anschlagstellung des Kolbens an dem Ventilgehäuse durch Federkraft gegen den Schlauchabschnitt angedrückt wird, damit er zum Erreichen der Durchflußsperre dann durch dieses separate Druckglied vollständig abgeklemmt wird.

Aus der GB 2 147 394 A ist ein Quetschventil bekannt, bei welchem auf eine Teillange einer Fluidleitung innerhalb einer zylindrischen Gehäusekammer des Ventils mit einem als ein pneumatisch beweglicher Kolben ausgebildeten Drücker unter Vermittlung einer zur Auskleidung der Gehäusekammer vorgesehenen Hülse eingewirkt wird. Die Hülse besteht aus einem hochelastischen Material größerer Dicke, wie bsp. porösem Gummi oder porösem Kunststoff, und erfüllt den Zweck, eine übermäßige Materialbeanspruchung der Fluidleitung während des Abklemmens durch den Drücker zu vermeiden.

Aus der US A 4 877 053 ist ein Quetschventil mit den Merkmalen gemäss dem Oberbegriff des Patentanspruches 1 bekannt, bei welchem die beiden dabei völlig gleich ausgebildeten Adapterstücke mit dem Ventilgehäuse fest verschraubt und durch O-Dichtungsringe abgedichtet sind, welche die beiden axialen Enden des durch diese Verschraubung der Adapterstücke axial unbeweglich in der Ventilkammer festgelegten Einsatzkörpers umgeben. An den beiden axialen Enden des von dem Einsatzkörper aufgenommenen Schlauchabschnittes sind radiale Dichtungsflansche ausgebildet, welche durch die Adapterstücke gegen die Stimflächen des Einsatzkörpers angedrückt werden. Dadurch ergibt sich für den Schlauchabschnitt ein abgedichteter Anschluss an die Fluidleitung, mit welcher das Quetschventil für eine stufenlos veränderbare Durchflussregelung eines Fluids über die beiden Adapterstücke verbunden ist. Bei diesem bekannten Quetschventil ist weiterhin der Drücker als ein durch den Druck eines Fluids bewegter und gegen einen umgebenden hohlzylindrischen Gehäuseansatz des Ventilgehäuses abgedichteter Druckkolben ausgebildet. Für eine alternative Ausbildung des Quetschventils kann dieser Druckkolben auch durch einen manuell betätigbaren, als eine Drehgriffanordnung ausgeführten Spindelantrieb bewegt werden. Wenn während eines längeren Einsatzes des Quetschventils und einer entsprechend häufigen Quetschung des Schlauchabschnittes dessen materialbedingte Alterung einsetzt, muss dann zur Sicherstellung einer fortgesetzt zuverlässigen Durchflussregelung des Fluids der Schlauchabschnitt ersetzt werden. Dieser Ersatz ist mit einem aufwändigen Abschrauben der beiden Adapterstücke für eine Entnahmemöglichkeit des Einsatzkörpers aus der Ventilkammer des Ventilgehäuses zusammen mit dem Schlauchabschnitt verbunden sowie mit einem nachfolgenden, ebenso aufwändigen Verschrauben der beiden Adapterstücke erneut mit dem Ventilgehäuse, sobald der Einsatzkörper mit einem neuen Schlauchabschnitt in die Ventilkammer wieder eingesetzt wurde.

Der Erfindung liegt die Aufgabe zugrunde, ein Quetschventil der angegebenen Art derart auszubilden, dass eine vergleichbar einfache Austauschmöglichkeit des Schlauchabschnittes besteht.

Zur Lösung dieser Aufgabe wird erfindungsgemäß ein Quetschventil bereitgestellt, welches mit den kennzeichnenden Merkmalen des Patentanspruches 1 ausgebildet ist.

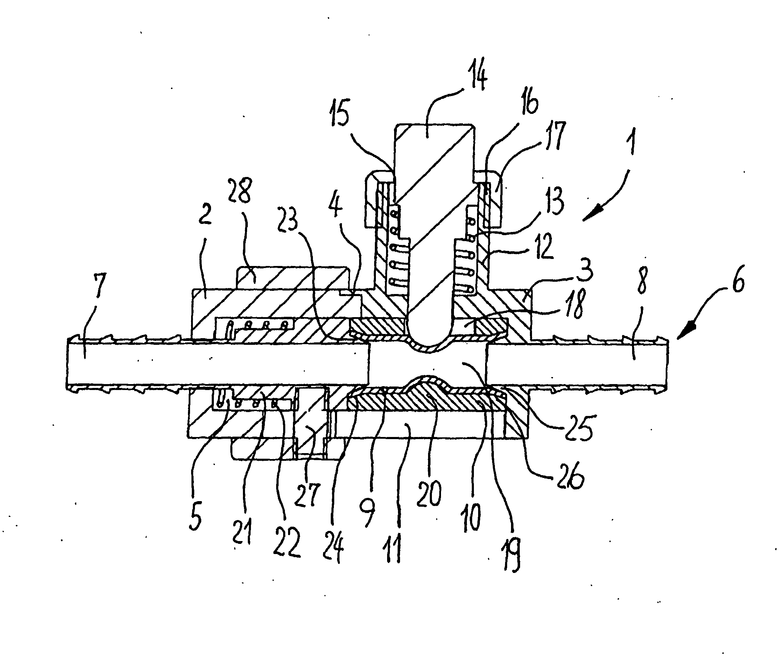

Die Vorteile des erfindungsgemäßen Quetschventils ergeben sich aus der folgenden Beschreibung einer bevorzugten Ausführungsform, die als ein Ausführungsbeispiel mit einer Schnittdarstellung in der Zeichnung gezeigt ist. Die Merkmale von zweckmäßigen Ausbildungen des erfindungsgemäßen Quetschventils sind in den weiteren Patentansprüchen angegeben. Das in der Zeichnung dargestellte Quetschventil 1 ist mit einem aus zwei Teilen 2 und 3 bestehenden Ventilgehäuse ausgeführt. Die beiden Gehäuseteile 2, 3 sind über ein Schraubgewinde 4 miteinander verbunden und umgeben eine zylindrische Ventilkammer 5, die von einer Teillänge 6 einer Fluidleitung durchsetzt wird.

Die Teillänge 6 einer Fluidleitung ist ausgebildet mit zwei Adapterstücken 7 und 8, die mit ihren über das Ventilgehäuse vorstehenden Enden ein Aufschieben von Schlauchenden der an das Quetschventil 1 angeschlossenen Fluidleitung erlauben. Der eigentliche Anschluß an die Fluidleitung wird durch einen flexiblen Schlauchabschnitt 9 erhalten, der in einer mit den beiden Adapterstücken 7 und 8 axial fluchtenden Durchgangsbohrung eines separaten Einsatzkörpers 10 aufgenommen ist.

Der Einsatzkörper 10 ist für eine Abstützung des Schlauchabschnittes 9 starr ausgebildet und kann über ein Auswurföffnung 11 des Gehäuseteils 3 in die Ventilkammer 5 eingesetzt werden. Gegenüberliegend zu der Auswurföffnung 11, die bsp. mit einem Schraubdeckel verschlossen werden kann, ist der Gehäuseteil 3 mit einem hohlzylindrischen Gehäuseansatz 12 versehen, der einen durch eine Rückstellfeder 13 nach außen vorgespannten Drücker 14 aufnimmt. Der Drücker 14 wird über einen Ringbund 15 an der Innenwand des Gehäuseansatzes 12 axial geführt, wenn er im Zusammenwirken mit einer mit einem Gewinde 16 des Gehäuseansatzes 12 verschraubten Schraubkappe 17 entgegen der Rückstellkraft der Feder 13 nach innen bewegt wird.

Das innere Ende des Drückers 14 durchsetzt eine Durchtrittsöffnung des Gehäuseteils 3 und eine schlitzförmig ausgebildete weitere Durchtrittsöffnung 18 des Einsatzkörpers 10. Der Drücker 14 erhält damit eine direkte Berührung mit dem Schlauchabschnitt 9, sodaß der Schlauchabschnitt mittels des Drückers 14 gequetscht und letztlich auch vollständig abgeklemmt werden kann, wenn eine völlige Durchflußsperre für das durch die Fluidleitung geleitete Fluid erhalten werden soll. Der maßgebliche Durchtrittsquerschnitt 19 des Schlauchabschnittes 9 kann also an dem Ort der Krafteinwirkung des Drückers 14 stufenlos verändert werden, wobei der Drücker an diesem Ort der Krafteinwirkung noch mit einem Widerlager 20 des Einsatzkörpers 10 zusammenwirkt.

In der Zeichnung ist für den Drücker 14 eine Einstelllage gezeigt, in welcher der Durchflußquerschnitt 19 des Schlauchabschnittes 9 auf eine vorbestimmte Zwischengröße eingestellt ist. Diese Zwischengröße des Durchflußquerschnittes 19 kann weiter verringert werden, wenn dafür der Drücker 14 weiter nach innen verschoben wird, wobei eine Grenze dann erhalten ist, wenn die Durchflußsperre erreicht ist.

Um einen einfachen Austausch des Einsatzkörpers 10 gemeinsam mit dem Schlauchabschnitt zu ermöglichen, ist für das eine Adapterstück 7 eine relativ zu dem Ventilgehäuse 2, 3 beweglichen Anordnung vorgesehen. Das Adapterstück 7 ist dafür mit einem Führungskörper 21 verbunden, der in der Ventilkammer 5 aufgenommen ist. Der Führungskörper 21 ist durch eine Feder 22 gegen den Einsatzkörper 10 vorgespannt, um mit einer konisch ausgebildeten Dichtlippe 23 einen abgedichteten Anschluß an das an einer konisch ausgebildeten Sitzfläche 24 des Einsatzkörpers 10 anliegende eine Ende des Schlauchabschnittes 9 zu erhalten. Die Vorspannkraft der Feder 22 ist so bemessen, daß auch für das zweite Adapterstück 8, welches mit dem Gehäuseteil 3 fest verbunden ist, ein abgedichteter Anschluß an das andere Ende des Schlauchabschnittes 9 erhalten wird. Für diesen abgedichteten Anschluß ist das fest angeordnete Adapterstück 8 ebenfalls mit einer konischen Dichtlippe 25 versehen, die mit dem an einer konischen Sitzfläche 26 des Einsatzkörpers 10 anliegenden Ende des Schlauchabschnittes 9 abgedichtet wird. Der Führungskörper 21 ist daneben über einen Mitnehmer 27 mit einem Schieberglied 28 verbunden, welches außen an dem Gehäuseteil 2 angeordnet ist. Durch eine Verschiebung des Schiebergliedes 28 entgegen der Kraft der Vorspannfeder 22 kann der Führungskörper 21 und damit das Anschlußende des Adapterstückes 7 an den Schlauchabschnitt 9 in eine Relativlage verschoben werden, in welcher der Einsatzkörper 10 über die Auswurföffnung 11 aus der Ventilkammer 9 entnommen werden kann.

Das vorbeschriebene Quetschventil kann bsp. für eine Durchflußregelung eines Fluids bei dem Arbeiten mit einem Endoskop vorgesehen werden. Das Ventil wird dann zweckmäßig an einem Grundkörper des Endoskops als Ersatz eines sonst üblichen Trompetenventils angeordnet.

Der Schlauchabschnitt 9 und der Einsatzkörper 10 sind vorteilhaft als ein Einmalprodukt ausgebildet. Diese Einmalprodukt kann entweder in seiner Gesamtheit oder auch nur mit dem Schlauchabschnitt für einen Austausch vorgesehen sein, sobald eine mit dem Schlauchabschnitt verwirklichte Regelcharakteristik des Quetschventils nicht mehr stimmen sollte und also von einer Materialermüdung des Schlauchabschnittes auszugehen ist.

Anstelle einer Anordnung des Schlauchabschnittes in einer Durchgangsbohrung des Einsatzkörpers kann auch eine Anordnung des Schlauchabschnittes auf einer zylindrischen Außenfläche des Einsatzkörpers vorgesehen sein. Der Einsatzkörper wäre dann massiv ausgebildet und würde mit seiner zylindrischen Außenfläche mit den Anschlußenden der beiden Adapterstücke axial fluchten, um im Zusammenwirken mit dem Schlauchabschnitt einen mittels des Drückers stufenlos veränderbaren Durchfluß-Regelkanal des Ventils auszubilden.

Anstelle der beweglichen Anordnung nur eines Adapterstückes, die grundsätzlich auch für das zweite Adapterstück vorgesehen werden kann, kann der Einsatzkörper mit zwei Teilstücken ausgebildet werden, die durch Federkraft gegeneinander und gegen die beiden Anschlüsse des Schlauchabschnittes an den beiden Adapterstücke vorgespannt sind. Auch mit dieser alternativen Ausbildung wäre eine einfache Austauschbarkeit des Schlauchabschnittes und/ oder des Einsatzkörpers sichergestellt.

## Patentansprüche

1. Quetschventil mit einem Durchfluss-Regelorgan in der Ausbildung eines flexiblen Schlauchabschnittes (9), der eine Teillänge (6) einer Fluidleitung bildet und für eine stufenlos veränderbare Durchflussregelung des Fluids über zwei Adapterstücke (7, 8) an die Fluidleitung abgedichtet anschließbar ist, wobei der Schlauchabschnitt (9) in einer mit den Adapterstücken (7, 8) axial fluchtenden Durchgangsbohrung eines in eine Ventilkammer (5) des Ventilgehäuses (2, 3) eingesetzten und zur Abstützung des Schlauchabschnittes (9) starr ausgebildeten Einsatzkörpers (10) aufgenommen und für eine durch eine Quetschung des Schlauchabschnittes (9) erreichte Veränderung seines Durchflussquerschnittes mit einem entgegen einer Rückstellfeder (13) beweglichen Drücker (14) direkt in Berührung bringbar ist,
**dadurch gekennzeichnet, dass** wenigstens eines (7) der beiden Adapterstücke (7, 8) eine relativ zu dem Einsatzkörper (10) bewegliche Anordnung an dem Ventilgehäuse (2, 3) aufweist und durch Federkraft in einen abgedichteten Anschluss an dem Einsatzkörper (10) und an dem zugeordneten Ende des Schlauchabschnittes (9) vorgespannt ist.

2. Quetschventil nach Anspruch 1, **dadurch gekennzeichnet, dass** der Drücker (14) von einem hohlzylindrischen Gehäuseansatz (12) aufgenommen und durch die Rückstellfeder (13) gegen eine mit einem Gewinde (16) des Gehäuseansatzes (12) verschraubte Schraubkappe (17) vorgespannt ist, durch deren Drehung der Drücker stufenlos verstellbar ist.

3. Quetschventil nach Anspruch 1 oder 2, **dadurch gekennzeichnet, dass** der Einsatzkörper (10) über eine Auswurföffnung (11) des Ventilgehäuses (23) in die Ventilkammer (5) einsetzbar ist.

4. Quetschventil nach Anspruch 3, **dadurch gekennzeichnet, dass** die Auswurföffnung (11) gegenüberliegend zu dem den Drücker (14) aufnehmenden Gehäuseansatz (12) ausgebildet und mit einem Schraubdeckel verschließbar ist.

5. Quetschventil nach einem der Ansprüche 1 bis 4, **dadurch gekennzeichnet, dass** bei einer an dem Ventilgehäuse (2, 3) beweglichen Anordnung nur des einen Adapterstückes (7) das zweite Adapterstück (8) mit dem Ventilgehäuse (2, 3) fest verbunden ist.

6. Quetschventil nach einem der Ansprüche 1 bis 5, **dadurch gekennzeichnet, dass** an dem Einsatzkörper (10) konische Sitzflächen (24, 26) für die beiden Enden des Schlauchabschnittes (9) ausgebildet sind, an welche korrespondierende konische Dichtlippen (23, 25) der beiden Adapterstücke (7, 8) anschließen.

7. Quetschventil nach Anspruch 6, **dadurch gekennzeichnet, dass** die konischen Dichtlippen (23, 25) der beiden Adapterstücke (7, 8) durch das jeweils zugeordnete Ende des Schlauchabschnittes (9) gegen die konischen Sitzflächen (24,26) des Einsatzkörpers (10) abgedichtet werden.

8. Quetschventil nach einem der Ansprüche 1 bis 7, **dadurch gekennzeichnet, dass** in der Ventilkammer (5) des Ventilgehäuses (2, 3) ein Führungskörper (21) für das bewegliche Adapterstück (7) aufgenommen ist, der durch eine Vorspannfeder (22) in den abgedichteten Anschluss des von ihm bewegten Adapterstückes (7) an dem Einsatzkörper (10) und an dem zugeordneten Ende des Schlauchabschnittes (9) vorgespannt ist.

9. Quetschventil nach Anspruch 8, **dadurch gekennzeichnet, dass** der Führungskörper (21) durch einen Mitnehmer (27) eines außen an dem Ventilgehäuse (2, 3) angeordneten Schiebergliedes (28) in eine Relativlage verschiebbar ist, in welcher der Einsatzkörper (10) gemeinsam mit dem Schlauchabschnitt (9) über die Auswurföffnung (11) aus dem Ventilgehäuse (2, 3) entnommen werden kann.

10. Quetschventil nach einem der Ansprüche 1 bis 9, **dadurch gekennzeichnet, dass** der Schlauchabschnitt (9) und/ oder der Einsatzkörper (10) als ein austauschbares Einmalprodukt ausgebildet ist bzw. sind.

## Claims

1. A pinch valve comprising a flow control member in the form of a flexible tube portion (9) which forms a partial length (6) of a fluid line and which is arranged for being connected in a sealed manner to the fluid line by means of two adapter pieces (7,8) for an infinitely variable flow control of the fluid whereby said tube portion (9) is arranged within a through hole which is axially aligned with the adapter pieces (7,8) of a rigid insert body (10) that is inserted into a valve chamber (5) of the valve housing (2,3) for supporting the tube portion (9) and adapted for being directly contacted by an actuator (14) which is biased against a resetting spring (13) for obtaining a variation of its cross-sectional area by a pinching action on the tube portion (9), **characterized in that** at least one (7) of the two adapter pieces (7,8) is provided with an arrangement on the valve housing (2,3) which is relatively moveable with respect to the insert body (10) and which is biased by a spring force into a sealed connection with the insert body (10) and with the adjacent end of the tube portion (9).

2. The pinch valve according to claim 1, **characterized in that** the actuator (14) is taken up in a hollow cylindrical housing portion (12) and is biased by said resetting spring (13) against a screw cap (17) which is screw connected with a screw thread (16) of the housing portion (12) so that by turning the screw cap the actuator is variably adjustable.

3. The pinch valve according to claim 1 or 2, **characterized in that** the insert body (10) may be inserted into the valve chamber (5) via an ejection opening (11) of the valve housing (23).

4. The pinch valve according to claim 3, **characterized in that** the ejection opening (11) is provided opposite to the housing portion (12) which takes up the actuator (14) and may be closed with a screw lid.

5. The pinch valve according to any of the claims 1 to 4, **characterized in that** when only said one adapter piece (7) is moveably arranged on the valve housing (2,3) the second adapter piece (8) is fixedly connected to the valve housing (2,3).

6. The pinch valve according to any of the claims 1 to 5, **characterized in that** tapered seating surfaces (24, 26) for the two ends of the tube portion (9) are provided on the insert body (10) for being connected with corresponding tapered sealing lips (23, 25) of the two adapter pieces (7,8).

7. The pinch valve according to claim 6, **characterized in that** the papered sealing lips (23,25) of the two adapter pieces (7,8) are each sealed against the tapered seating surfaces (24, 26) of the insert body (10) by means of a respectively adjacent end of the tube portion (9).

8. The pinch valve according to any of the claims 1 to 7, **characterized in that** a guide body (21) for the moveable adapter piece (7) is taken up in the valve chamber (5) of the valve housing (2,3) which by means of a bias spring (22) is biased into the sealed connection of the cooperating adapter piece (7) with the insert body (10) and with the adjacent end of the tube portion (9).

9. The pinch valve according to claim 8, **characterized in that** the guide body (21) is displaceable by a tappet (27) of an outer slide member (28) as arranged on the valve housing (2,3) into a relative position in which the insert body (10) together with the tube portion (9) may be taken out from the valve housing (2,3) via the ejection opening (11).

10. The pinch valve according to any of the claims 1 to 9, **characterized in that** the tube portion (9) and/ or the insert body (10) is/ are provided as an exchangeable one-way product.

## Revendications

1. Soupape à compression, comprenant un dispositif à régler le débit sous forme d'un tronçon de tuyau flexible (9), qui constitue une longueur partielle (6) d'un conduit de fluide et qui est apte à être relié, de façon étanche, via deux éléments adaptateurs (7, 8) audit conduit de fluide, ledit tronçon de tuyau flexible étant inséré dans un alésage de passage, en alignement axial avec lesdits éléments adaptateurs (7, 8), d'un corps d'insert (10) inséré dans une chambre de soupape (5) de la cage de soupape (2, 3) et présentant une configuration rigide pour l'appui dudit tronçon de tuyau flexible (9), pendant qu'il est apte à être porté en contact direct avec un poussoir (14) mobile à l'encontre d'un ressort de rappel pour une variation de sa section de passage, qui est achevée par une compression dudit tronçon de tuyau flexible (9),
**caractérisée en ce qu'**au moins un (7) desdits deux éléments adaptateurs (7, 8) présente un arrangement mobile relativement audit corps d'insert à ladite cage de soupape, en étant mis en précontrainte par tension d'un ressort en raccord étanche audit corps d'insert (10) et à l'extrémité appartenant dudit tronçon de tuyau flexible.

2. Soupape à compression selon la revendication 1, **caractérisée en ce que** ledit poussoir (14) est reçu dans un bout (12) de la cage en cylindre creux et mis en précontrainte par ledit ressort de rappel (13) contre un bouchon fileté (17) vissé sur un filet (16) dudit bout (12) de la cage, dont la rotation permet le réglage progressif dudit poussoir.

3. Soupape à compression selon la revendication 1 ou 2, **caractérisée en ce que** ledit corps d'insert (10) est apte à être inséré via une ouverture d'éjection (11) de ladite cage de soupape (23) dans ladite chambre de soupape (5).

4. Soupape à compression selon la revendication 3, **caractérisée en ce que** ladite ouverture d'éjection (11) est formée en opposition audit bout (12) de la cage à recevoir ledit poussoir (14) et est apte à être fermée par un couvercle fileté.

5. Soupape à compression selon une quelconque des revendications 1 à 4, **caractérisée en ce qu'**au cas d'un arrangement mobile de seulement un (7) desdits éléments adaptateurs à ladite cage de soupape (2, 3), le deuxième élément adaptateur (8) est rendu solidaire avec ladite cage de soupape (2, 3).

6. Soupape à compression selon une quelconque des revendications 1 à 5, **caractérisée en ce que** des surfaces de siège coniques (24, 26) sont formée audit corps d'insert (10) pour les deux extrémités dudit tronçon de tuyau flexible (9), auxquelles se joignent des lèvres d'étanchéité coniques correspondantes (23, 25) desdits deux éléments adaptateurs (7, 8).

7. Soupape à compression selon la revendication 6, **caractérisée en ce que** lesdites lèvres d'étanchéité coniques (23, 25) desdits deux éléments adaptateurs (7, 8) sont rendues étanches contre lesdites surfaces de siège (24, 26) dudit corps d'insert (10) moyennant l'extrémité affectée respective dudit tronçon de tuyau flexible (9).

8. Soupape à compression selon une quelconque des revendications 1 à 7, **caractérisée en ce qu'**un corps des guidage (21) pour ledit élément adaptateur (7) mobile est reçu dans ladite chambre de soupape (5) de ladite cage de soupape (2, 3), quel corps est mis en précontrainte, moyennant un ressort de précontrainte, dans le raccord étanche de l'élément adaptateur (7) déplacé par lui audit corps d'insert (10) et à l'extrémité affectée dudit tronçon (9) de tuyau flexible.

9. Soupape à compression selon la revendication 8, **caractérisée en ce que** ledit corps de guidage (21) est apte à être déplacé dans une position relative moyennant un entraîneur (27) d'un élément à coulisse (28) disposé à l'extérieur de ladite cage de soupape (2, 3), à laquelle position relative on peut enlever ledit corps d'insert (10) en dehors de ladite cage de soupape (2, 3) ensemble avec ledit tronçon (9) de tuyau flexible via ladite ouverture d'éjection (11).

10. Soupape à compression selon une quelconque des revendications 1 à 9, **caractérisée en ce que** ledit tronçon (9) de tuyau flexible et/ou ledit corps d'insert (10) est/sont configuré(s) sous forme d'un produit'échangeable à usage unique.
